(19) Europäisches Patentamt / European Patent Office / Office européen des brevets

(11) **EP 2 216 633 A1**

(12) **DEMANDE DE BREVET EUROPEEN**

(43) Date de publication:
**11.08.2010 Bulletin 2010/32**

(51) Int Cl.:
***G01F 23/36*** *(2006.01)*

(21) Numéro de dépôt: **10152468.4**

(22) Date de dépôt: **03.02.2010**

| | |
|---|---|
| (84) Etats contractants désignés:<br>**AT BE BG CH CY CZ DE DK EE ES FI FR GB GR HR HU IE IS IT LI LT LU LV MC MK MT NL NO PL PT RO SE SI SK SM TR**<br>Etats d'extension désignés:<br>**AL BA RS**<br><br>(30) Priorité: **04.02.2009 FR 0950687** | (71) Demandeur: **Aisan Industry France SA**<br>**58000 Nevers (FR)**<br><br>(72) Inventeur: **Martin, Pascal**<br>**58160, SAUVIGNY LES BOIS (FR)**<br><br>(74) Mandataire: **Myon, Gérard Jean-Pierre et al**<br>**Cabinet Lavoix**<br>**62, Rue de Bonnel**<br>**69448 Lyon Cedex 03 (FR)** |

(54) **Ensemble de mesure du niveau de liquide dans une enceinte, et véhicule automobile correspondant**

(57)    Cet ensemble de mesure comprend un flotteur (2) propre à reposer à la surface du liquide, un bras (4) solidaire du flotteur, propre à être entraîné en rotation par ce flotteur, un rhéostat (20, 34) logé dans une enceinte étanche, propre à générer une résistance variable en fonction des variations du niveau de liquide, et des moyens d'entraînement (10, 12) propres à entraîner l'un des organes électriques du rhéostat, lors du déplacement du bras, ces moyens d'entraînement ne s'étendant pas au travers d'une paroi de ladite chambre étanche. Les moyens d'entraînement comprennent des moyens de surmultiplication (10,12), permettant de réduire le phénomène d'hystérésis.

Fig.1

## Description

La présente invention concerne un ensemble de mesure du niveau de liquide dans une enceinte.

L'invention vise plus particulièrement, mais non exclusivement, les jauges de mesure du niveau de carburant dans un réservoir, équipant un véhicule automobile. Cependant, elle trouve également son application à d'autres environnements et d'autres types de liquides, notamment pour lesquels des problèmes de corrosion ou d'encrassement peuvent être rencontrés. A cet égard, on notera que, au sens de l'invention, la désignation de véhicule automobile s'étend également de façon plus générale aux motocyclettes, aux utilitaires légers et aux poids lourds.

On connait tout d'abord des jauges à carburant, qui comprennent un ensemble formant capteur, constitué d'un flotteur solidaire d'un bras. Ce capteur, qui est entraîné en mouvement en fonction du niveau de carburant, actionne une résistance électrique variable de type rhéostat. Cette dernière est elle-même constituée d'une plaquette résistive, par rapport à laquelle se déplace un curseur associé à des contacts.

Cette solution connue, qui est simple d'un point de vue mécanique, permet de remplir de façon correcte la fonction recherchée, pour un coût particulièrement bas. En revanche, elle se révèle peu adaptée pour des environnements agressifs, auxquels peuvent être sensibles les matériaux de la jauge, en particulier ceux de la résistance variable.

On considère, entre autres, comme agressifs :

- Les composés soufrés, qui dégradent en particulier les contacts électriques constitués d'argent ou de cuivre, en des composés non conducteurs.
- L'eau, en général liée à la présence d'alcool, qui favorise la dégradation des matériaux par corrosion électrolytique. On retrouve une fraction d'eau initiale, ainsi qu'une fraction d'eau supplémentaire due à l'absorption de l'humidité ambiante lors des stockages et transvasements.
- Certains acides, notamment de type formique, acétique, chlorhydrique, nitrique, ou encore sulfurique qui amplifient les problèmes précédents ou agissent par corrosion directe.
- Certaines huiles ou esters, dont le vieillissement accéléré par la chaleur, l'oxygène, l'eau, les ions métal et autres impuretés, conduit à la formation de produits corrosifs, tels des acides, ainsi que de produits de polymérisation. Ces derniers s'accompagnent de dépôts ou de précipités, susceptibles d'encrasser les liaisons électriques.
- Certaines conditions ambiantes extrêmes pouvant amplifier ou accélérer les phénomènes précités. Il s'agit notamment des basses températures, générant des phénomènes de condensation, de l'altitude, de la présence de poussières ou d'impuretés.

On retrouve certaines des conditions agressives listées ci-dessus :

- Dans certains pays, du fait des conditions locales de raffinage et de distribution des carburants.
- Dans le cadre d'utilisation de « bio-carburants», à savoir de carburants issus de végétaux et non pas de ressources fossiles. On citera notamment à cet égard, à titre non limitatif, les essences avec alcool, ou encore les « bio-diesels », tels que par exemple l'ester méthylique de colza EMC.
- Du fait de la présence de certains additifs tels que des lubrifiants, des nettoyants, ou encore des additifs pour les filtres à particules.

Lorsqu'une jauge à carburant, du type décrit ci-dessus, est utilisée dans un environnement agressif, ceci conduit à des dysfonctionnements, qui peuvent aller de la perturbation du signal transmis au tableau de bord, susceptible d'induire une indication erronée ou aléatoire du niveau de carburant, à la perte totale de la fonction recherchée, à savoir une absence complète d'indication du niveau de carburant. Il existe par conséquent un risque de tomber en « panne sèche », ce qui est particulièrement désagréable pour le conducteur et peut même, dans certaines conditions, entraîner la perte de contrôle du véhicule.

Il convient également de prendre en compte le risque de dégradation du rhéostat de la jauge, lors d'une utilisation dans un environnement agressif. Ceci est alors susceptible de conduire à un risque d'inflammation ou d'explosion, étant donné que le rhéostat constitue alors un système électrique ouvert mis en contact avec les vapeurs de carburant. Bien que ce risque soit inexistant avec des carburants habituels, il doit être pris en compte lors de l'utilisation de carburants dits « oxygénés », en particulier des essences avec un fort pourcentage d'alcool.

Afin de remédier à ces différents inconvénients, on a tout d'abord envisagé les solutions suivantes :

- l'utilisation de matériaux plus résistants aux agressions chimiques. On citera notamment les aciers inoxydables, les matériaux cuivreux protégés par étamage ou nickelage ou bien l'enrichissement en or, palladium ou platine des éléments conducteurs appartenant à la plaquette résistive et aux contacts du curseur.
- L'utilisation de transducteurs à effet Hall pour remplacer le rhéostat, formé de la plaquette résistive et du curseur, par un système électronique de conversion de mouvement de rotation en un signal électrique.
- L'utilisation d'autres procédés de mesure du niveau ou de la quantité de carburant disponible dans le réservoir, tels que des mesures capacitives, des mesures des débits entrant et sortant, ou encore des mesures de la pression.

Cependant, ces différentes solutions alternatives ne peuvent être envisagées industriellement, dans la mesure où elles s'accompagnent d'un coût élevé ainsi que de modifications significatives de la structure de l'ensemble du véhicule.

Dans ces conditions, on a proposé une solution plus satisfaisante, dans le cadre de laquelle se situe l'invention. Ainsi, afin de se prémunir de toutes les agressions de carburant décrites ci-dessus, il s'agit d'enfermer la partie la plus sensible de la jauge, à savoir le rhéostat, dans une chambre étanche ne se trouvant pas en contact avec le carburant.

Dans cet esprit, on connaît, par exemple de GB-A-970 256, une première solution dans laquelle le bras, solidaire du flotteur, traverse la paroi de la chambre étanche, afin d'entraîner de façon directe un curseur coopérant avec une plaquette résistive, ces deux derniers éléments se trouvant à l'intérieur de la chambre. Dans ces conditions, il est nécessaire de prévoir un joint associé à un presse-joint, au niveau de la paroi de la chambre traversée par le bras.

Cet agencement présente cependant certains inconvénients. Ainsi, le joint réalisé en un matériau élastomère se dégrade lors de son utilisation, sous l'effet des agressions cumulées notamment de type chimique, thermique et mécanique. Dans ces conditions, ceci conduit à l'absence d'étanchéité du volume intérieur de la chambre.

De plus, la présence du joint induit un couple de freinage susceptible de générer une hystérésis, nuisible à la précision de mesure. Enfin, le vieillissement du matériau constitutif du joint dégrade la qualité de mesure, qui est par conséquent variable dans le temps.

Afin de s'affranchir de l'utilisation d'une liaison mécanique directe, on a proposé une autre solution consistant à entraîner le rhéostat par couplage magnétique, à travers la paroi de la chambre étanche, comme envisagé dans US-A-5 357 815. Dans cet esprit, on retrouve tout d'abord l'ensemble formé par le flotteur et le bras, à l'extérieur de la chambre étanche, qui coopère avec un premier moyeu. De plus, cette chambre reçoit le rhéostat associé à un second moyeu. Le couplage magnétique est réalisé par l'intermédiaire de deux aimants, dont l'un est lié au bras et dont l'autre est lié au curseur du rhéostat, ces deux aimants étant donc situés de part et d'autre de la chambre étanche.

Une solution supplémentaire, visant à s'affranchir de l'utilisation d'une liaison mécanique directe, consiste à tirer parti de la gravité. Dans cet agencement, le bras entraîne directement en rotation, lors de son mouvement imparti par le flotteur, la chambre étanche ainsi que la plaquette résistive. En revanche, lors d'une telle rotation, le curseur reste immobile, étant donné qu'il est lié à un contrepoids qui l'empêche de se déplacer. On conçoit donc qu'il existe un mouvement relatif entre le curseur et la plaquette résistive, non pas du fait de la rotation du curseur comme dans les modes de réalisation précédents, mais du fait de la rotation de la plaquette résistive.

Les deux dernières solutions présentées ci-dessus, faisant appel respectivement à un entraînement magnétique et à un contrepoids, présentent cependant des inconvénients. En effet, la mesure de niveau ainsi réalisée ne se révèle pas d'une grande précision. De plus, l'utilisation de ces agencements s'accompagne en général d'un retard et de saccades dans la rotation du rhéostat.

Ceci étant précisé, l'invention vise à remédier aux différents inconvénients de l'art antérieur évoqués ci-dessus. Elle vise en particulier à proposer un ensemble de mesure du niveau de liquide qui, tout en étant adapté à une utilisation dans des environnements agressifs, présente une structure relativement simple, un coût réduit, ainsi qu'une fiabilité satisfaisante.

A cet effet, elle a pour objet un ensemble de mesure du niveau de liquide dans une enceinte, comprenant :

- un flotteur propre à reposer à la surface du liquide, afin de suivre les variations du niveau de ce liquide ;
- un bras solidaire du flotteur, propre à être entraîné en rotation par ce flotteur ;
- un rhéostat logé dans une chambre étanche, ce rhéostat comprenant deux organes électriques susceptibles de se déplacer l'un par rapport à l'autre, notamment une plaquette résistive et un curseur, afin de générer une résistance électrique variable, les variations de cette résistance étant représentatives des variations du niveau de liquide dans l'enceinte, et
- des moyens d'entraînement propres à entraîner un premier des deux organes électriques du rhéostat par rapport à un second de ces deux organes, sous l'effet du déplacement du bras, ces moyens d'entraînement ne s'étendant pas au travers d'une paroi de la chambre étanche,

**caractérisé en ce que** les moyens d'entraînement comprennent des moyens de surmultiplication, propres à entraîner le premier organe électrique selon un déplacement angulaire bien supérieur au déplacement angulaire du bras.

Selon d'autres caractéristiques de l'invention :

- les moyens de surmultiplication sont propres à assurer un rapport de surmultiplication compris entre 3.5 et 7, notamment entre 5 et 6.
- les moyens de surmultiplication sont formés par un engrenage.
- l'engrenage comprend deux organes dentés susceptibles de coopérer mutuellement, un premier de ces organes dentés étant entraîné par le bras, alors que le second de ces organes dentés est propre à entraîner ledit premier organe électrique, le nombre de dents du premier organe denté étant bien supérieur au nombre de dents du second organe denté, en référence à un secteur angulaire de 360°.

- les moyens d'entraînement comprennent des moyens de couplage magnétique entre deux pièces situées de part et d'autre d'une cloison de la chambre étanche.

- le second organe denté, dit moteur, est placé à l'extérieur de la chambre et est propre à entraîner un organe de couplage passif, placé à l'intérieur de la chambre, cet organe de couplage passif supportant ledit premier organe électrique.

- chacun parmi l'organe denté moteur et l'organe de couplage passif est pourvu d'au moins deux aimants, un premier aimant appartenant à l'organe moteur ou à l'organe passif étant propre à coopérer, par une première polarité, avec l'aimant en regard porté par l'organe passif ou l'organe moteur, alors qu'un second aimant porté par l'organe moteur ou l'organe passif est propre à coopérer, par sa seconde polarité, avec l'aimant en regard porté par l'organe passif ou l'organe moteur.

- la chambre étanche est propre à être mise en mouvement par les moyens d'entraînement et supporte ledit premier organe électrique, le second organe électrique étant associé à un contrepoids, propre à l'immobiliser lors des déplacements de la chambre.

- le second organe denté est monté sur une paroi de la chambre étanche.

- le rhéostat comprend une plaquette résistive pourvu d'une série de pistes conductrices s'étendant en arc de cercle, selon un secteur angulaire compris entre 270 et 330°.

- l'ensemble de mesure est une jauge de mesure du niveau de carburant dans un réservoir.

L'invention a également pour objet un véhicule automobile comprenant une jauge de mesure du niveau de carburant, telle que décrite ci-dessus.

L'invention va être décrite ci-après en référence aux dessins annexés, donnés uniquement à titre d'exemples non limitatifs, dans lesquels :

- La figure 1 est une vue en perspective, illustrant de façon éclatée les différents éléments constitutifs d'un ensemble de mesure de niveau, conforme à un premier mode de réalisation de l'invention ;

- La figure 2 est une vue en perspective, illustrant l'ensemble de mesure de la figure 1, dans sa position montée ;

- La figure 3 est une vue de face illustrant l'ensemble de mesure des figures 1 et 2 ;

- La figure 4 est une coupe longitudinale schématique de cet ensemble de mesure ;

- La figure 5 est une vue de face, illustrant de façon plus précise les éléments constitutifs d'un rhéostat appartenant à cet ensemble de mesure ;

- Les figures 6 et 7 sont des vues en coupe longitudinale, analogues à la figure 4, illustrant deux variantes de ce premier mode de réalisation ;

- La figure 8 est une vue en coupe longitudinale, analogue à la figure 4, illustrant un ensemble de mesure de niveau conforme à un second mode de réalisation de l'invention ;

- La figure 9 est une vue de face illustrant l'ensemble de mesure de la figure 8.

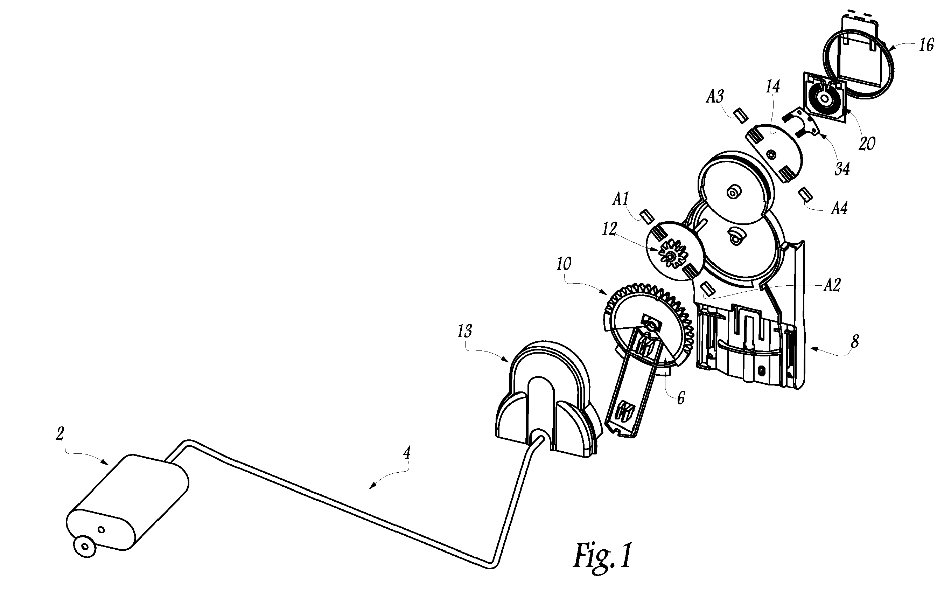

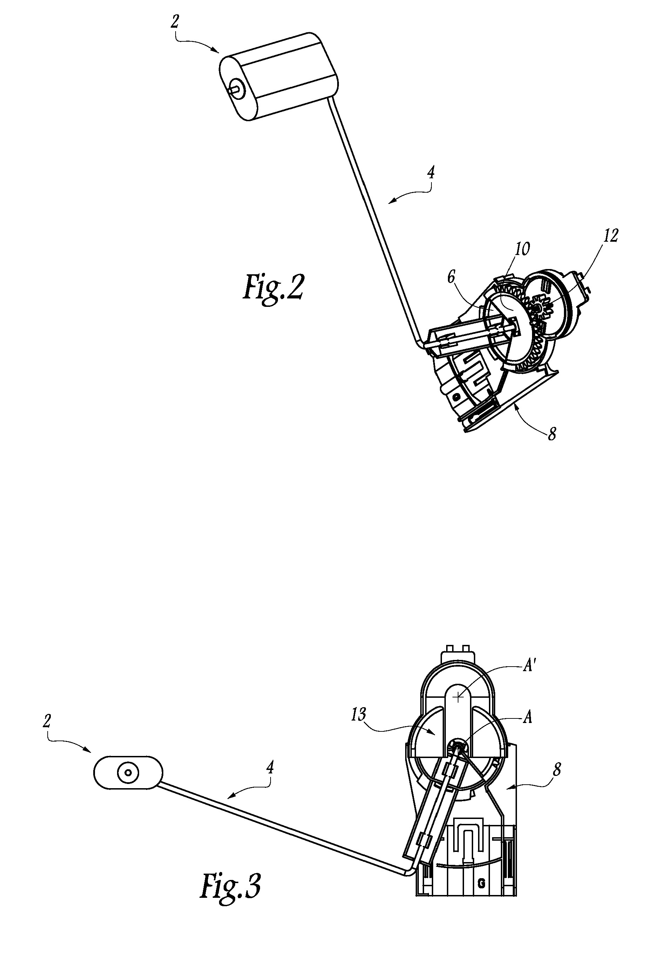

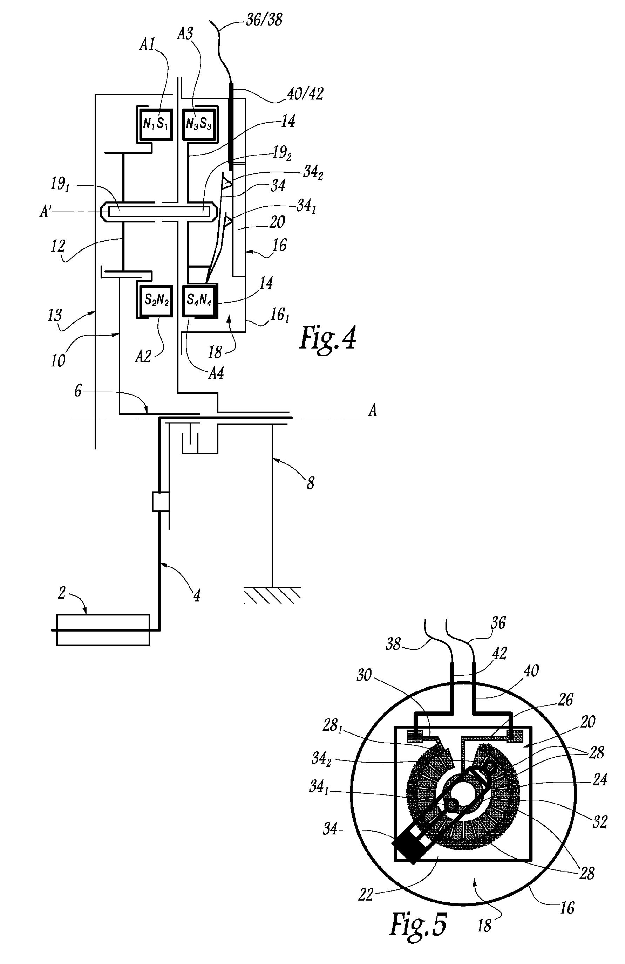

L'ensemble de mesure de niveau conforme à un premier mode de réalisation de l'invention, illustré aux figures 1 à 5, est en l'occurrence une jauge de mesure du niveau de carburant, appartenant à un véhicule automobile non représenté. Cette jauge comprend tout d'abord, de manière habituelle, un flotteur 2 destiné à reposer à la surface du liquide, qui n'est pas représenté. Ce flotteur 2 est solidaire d'un bras 4, qui est propre à entraîner en rotation un moyeu 6, autour d'un axe noté A (voir figure 4). Ce moyeu est monté sur un support 8, qui est lui-même fixe par rapport à la paroi du réservoir, qui n'est pas non plus représenté.

Le moyeu 6 supporte une couronne dentée 10, dont la denture s'étend sur un secteur angulaire bien inférieur à 360°, dans l'exemple égal à 180° environ. Cette couronne 10 coopère avec une roue dentée 12 qui est dénommée motrice, car elle entraîne en rotation une autre roue, comme on le verra plus en détail dans ce qui suit. Le moyeu 6 et la roue dentée associée 12 sont recouverts par un capot 13, permettant de les protéger à l'égard des agressions extérieures, notamment des particules amenées par le carburant et qui seraient susceptibles de bloquer l'engrenage.

La couronne 10 et la roue motrice 12 autorisent une surmultiplication du mouvement, du fait que le nombre de dents de la couronne 10 est bien supérieur au nombre de dents de la roue dentée 12, en référence à un secteur angulaire d'un tour complet à la fois pour la couronne et pour la roue. De manière avantageuse, le rapport entre le nombre de dents porté par la couronne et le nombre de dents porté par la roue est compris entre 3.5 et 7, de préférence entre 5 et 6.

Une seconde roue 14, dite passive, est également portée par le support 8. Les deux roues 12 et 14 sont placées de part et d'autre de la paroi du support, en étant toutes deux propres à entrer en rotation autour du même axe géométrique A' (voir figure 4). Ces roues 12 et 14 sont montées sur des axes pivots respectifs $19_1$ et $19_2$. L'axe pivot $19_2$ s'étend à l'intérieur de la chambre 18, alors que l'axe pivot $19_1$ s'étend à l'extérieur de celle-ci. Comme visible à la figure 4, ces deux axes pivots peuvent être confondus en un unique élément mécanique, réalisé par exemple d'un seul tenant avec la paroi du support.

Par ailleurs, un couvercle 16 est fixé de manière étanche sur le support 8. A cet effet, on peut envisager tout procédé connu, assurant une telle fixation étanche. On citera, à titre non limitatif, un vissage avec joint élastomère, un encliquetage étanche avec ou sans joint, un collage, une soudure à chaud, au miroir ultrasons ou encore par friction. Ce support 8 et ce couvercle 16 définissent les parois d'une chambre étanche, affectée de la référence 18.

La paroi $16_1$ du couvercle 16, qui se trouve en regard du support 8, porte une plaquette résistive 20, de type connu en soi, plus particulièrement visible à la figure 5. Cette plaquette résistive est formée d'une plaque isolante 22, sur laquelle sont sérigraphiées différentes pistes en encre conductrice. On retrouve tout d'abord une piste centrale 24, dite piste conductrice commune, formant un anneau, qui est prolongée par une première piste de liaison 26.

De plus, on retrouve une série de pistes conductrices 28, dites périphériques, qui s'étendent selon un arc de cercle à la périphérie de la piste annulaire centrale. De façon avantageuse, ces différentes pistes conductrices, dites périphériques, s'étendent selon un secteur angulaire proche de 360°, notamment compris entre 270° et 330°. L'une $28_1$ de ces pistes conductrices périphériques, dite d'extrémité, est prolongée par une seconde piste de liaison 30. De plus, à leur extrémité radiale extérieure, les différentes pistes périphériques sont en contact avec une zone en encre résistive 32, également de type connu, qui est représentée ombrée à la figure 5.

La roue passive 14 supporte un curseur 34 qui est pourvu de contacts $34_1$ et $34_2$. De façon connue en soi, chaque contact, respectivement $34_1$ et $34_2$, est propre à coopérer avec une piste conductrice, respectivement celle 24 ménagée de façon centrale et l'une de celles 28 placées à la périphérie. L'ensemble constitué de la plaquette résistive et du curseur forme une résistance variable de type rhéostat.

Les deux pistes conductrices de liaison 26 et 30 sont reliées respectivement avec un câble de masse 36 et avec un câble de signal 38 par l'intermédiaire de barrettes 40 et 42. Ces dernières, qui permettent la traversée étanche des parois de la chambre 18, peuvent être surmoulées dans le couvercle 16 ou bien être insérées entre le support 8 et le couvercle 16, lors de la soudure ou du collage de ces deux éléments. A titre de variante, on peut envisager des solutions alternatives au surmoulage, en particulier l'emmanchement en force, ou encore l'inclusion dans un joint assurant la liaison étanche entre le couvercle et le support.

Les deux câbles précités 36 et 38 s'étendent enfin en direction du tableau de bord du véhicule, non représenté, ce qui permet d'afficher la quantité de carburant disponible dans le réservoir.

Dans ce premier mode de réalisation, la roue motrice 12 entraîne la roue passive 14 sans contact, à savoir en l'absence d'un organe mécanique de transmission tel qu'un arbre. Un tel entraînement peut être dénommé « immatériel » ou « indirect », dans la mesure où il ne fait pas appel à un organe d'entraînement direct, traversant la paroi de la chambre 18. En l'occurrence, cet entraînement immatériel est assuré de façon magnétique.

De manière plus précise (figure 4), la roue motrice 12 est équipée de deux aimants, notés $A_1$ et $A_2$, qui sont placés à la périphérie extérieure de cette roue en étant séparés angulairement de 180°. On note $N_1$ et $S_1$ les pôles magnétiques du premier aimant $A_1$, et par ailleurs $S_2$ et $N_2$ les pôles magnétiques du second aimant $A_2$. De façon analogue, la roue passive 14 est pourvue de deux aimants $A_3$ et $A_4$, séparés angulairement de 180°, dont on note $N_3$ et $S_3$, ainsi que $N_4$ et $S_4$, les différents pôles magnétiques.

Comme le montre la figure 4, le pôle sud $S_1$ du premier aimant $A_1$ est placé en face du pôle nord $N_3$ de l'aimant $A_3$ en regard, équipant la roue passive 14. En outre, le pôle nord $N_2$ du second aimant porté par la roue motrice 12 est placé en face du pôle sud $S_4$ de l'aimant $A_4$ en regard, porté par la roue passive 14.

On notera que cet agencement permet d'éviter un accouplement entre les deux roues, dans une configuration différente de celle théoriquement prévue. En effet, étant donné que les deux aimants d'une même roue coopèrent avec les aimants en regard par des pôles différents, un unique aimant d'une roue donnée est propre à coopérer avec un unique aimant de la roue en regard.

De plus, étant donné que les paires d'aimants sont disposées à 180° l'une par rapport à l'autre, ceci limite à 90° la distance angulaire entre les aimants des roues respectivement motrice et passive. Cet écart garantit un ré-accouplement rapide soit par attraction entre polarités, soit par répulsion entre mêmes polarités. Dans ces conditions, dès que l'écart angulaire entre les roues atteint une valeur d'environ 50 à 60°, il s'opère un phénomène magnétique de répulsion ou d'attraction, permettant de replacer l'accouplement dans son état d'origine. Par conséquent, le mode de réalisation de l'invention permet de s'affranchir du risque possible, dû à la perte d'accouplement sous l'effet d'un choc ou d'une accélération brutale.

Ainsi, les aimants $A_1$ à $A_4$ constituent des moyens de couplage magnétique sans contact entre les roues 12 et 14 qui sont disposées de part et d'autre de la partie du support 8 qui forme une cloison pour la chambre 18.

Dans ce mode de réalisation, on a présenté quatre aimants isolés, équipant les deux roues 12 et 14. Cependant, on peut prévoir d'autres configurations appropriées, permettant d'associer deux polarités différentes sur une première roue, propres à coopérer avec des polarités différentes associées à l'autre roue.

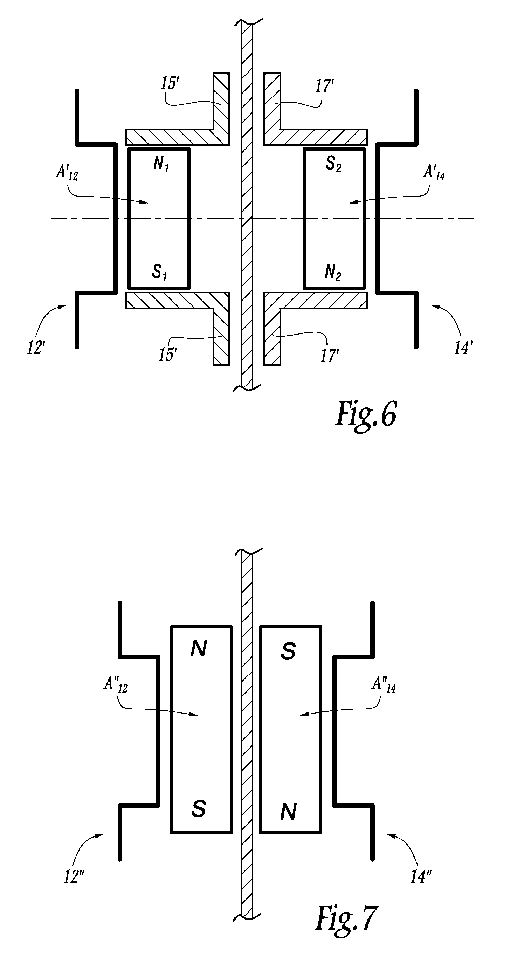

Ainsi, à la figure 6, on retrouve un unique aimant $A'_{12}$, porté par la roue 12', ainsi qu'un unique aimant $A'_{14}$, porté par la roue 14'. Ces deux aimants, qui sont centrés sur l'axe A' coopèrent avec différentes pièces polaires, réalisées en acier doux, qui sont affectés des références 15' et 17'. Les deux polarités $N_1$ et $S_1$ du premier aimant $A'_{12}$ sont placés en regard des polarités opposées $S_2$ et $N_2$ de l'autre aimant.

A titre de variante supplémentaire, représentée à la figure 7, on peut prévoir que chaque roue 12" et 14" supporte un unique aimant $A''_{12}$ et $A''_{14}$, comme sur la figure 6, avec mise en regard des polarités opposées.

En revanche, dans cette variante, ces deux aimants sont placés au voisinage de la paroi du support, de sorte qu'ils coopèrent sans être associés à des pièces polaires.

En service, en fonction des variations de niveau de carburant dans le réservoir, le flotteur est entraîné en mouvement selon une direction verticale. Ceci induit une rotation correspondante du moyeu et de la couronne dentée 10 selon un secteur angulaire donné, noté $\alpha$. Cette couronne entraîne alors en rotation la roue dentée motrice 12, selon un secteur angulaire $\beta$, nettement supérieur à $\alpha$ :

$$\beta = \alpha * N_{10} / N_{12}$$

où $N_{10}$ et $N_{12}$ sont le nombre de dents appartenant respectivement à la couronne 10 et à la roue 12, en supposant que celles-ci s'étendent sur un secteur angulaire de 360°.

Le pivotement de la roue motrice entraîne alors une mise en rotation correspondante de la roue passive 14, par attraction magnétique comme décrit ci-dessus. Ceci conduit alors au déplacement du curseur le long des deux pistes conductrices. La zone résistive est équivalente à une série de résistances entre chacune des pistes périphériques, dont le nombre est sélectionné par le curseur lors de son déplacement.

On mesure alors, entre le câble de signal 38 et le câble de masse 36 reliés à la piste commune, une résistance qui est variable pas à pas. Cette résistance dépend de la position angulaire du curseur et, par conséquent, de la position en hauteur du flotteur, à savoir du niveau de liquide. Dans ces conditions, l'ensemble formé par la plaquette résistive 20 pourvue de ses différentes pistes 24 à 30, et du curseur 34 équipé de ses contacts $34_1$ et $34_2$, constitue un rhéostat. La valeur de cette résistance variable, représentative du niveau de carburant, permet de façon connue d'indiquer au conducteur l'information correspondante.

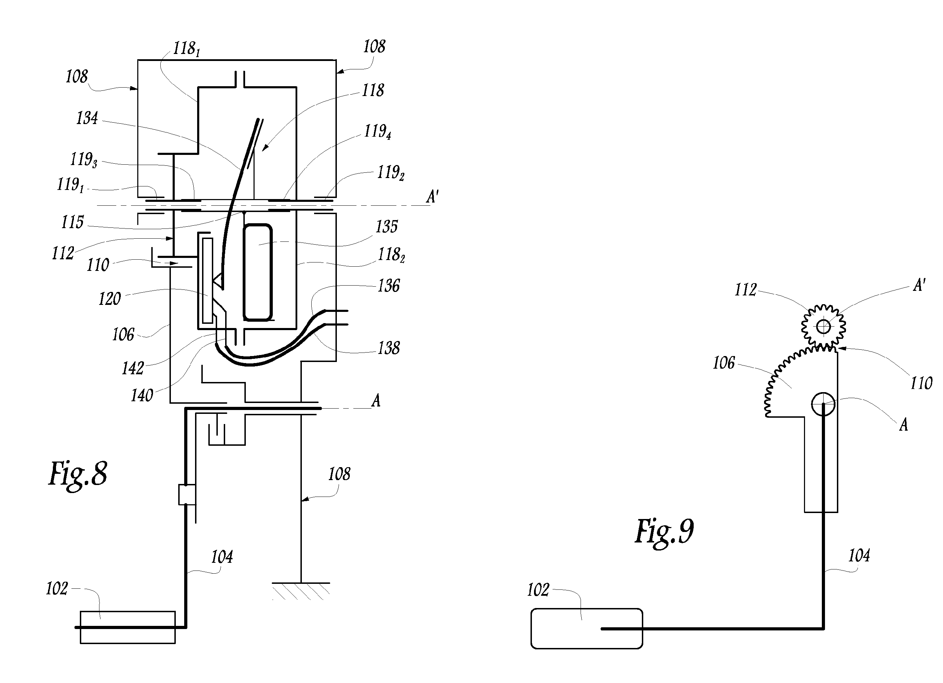

Les figures 8 et 9 suivantes illustrent un autre mode de réalisation de l'invention. Sur ces figures, les éléments analogues à ceux des premières figures y sont affectés des mêmes numéros de référence, augmentés de 100.

Dans ce mode de réalisation alternatif, on retrouve un flotteur 102, solidaire d'un bras 104, qui est propre à entraîner en rotation un moyeu 106, monté pivotant sur un support 108 autour d'un axe A. De plus, ce moyeu 106 est solidaire d'un secteur denté 110, s'étendant selon un secteur angulaire bien inférieure à un tour complet.

On retrouve également une chambre étanche 118 dont les parois en regard $118_1$ et $118_2$ portent chacune deux axes pivots. De façon plus précise, on retrouve deux premiers axes pivots s'étendant vers l'extérieur de la chambre, qui sont affectés des références $119_1$ et $119_2$, ainsi que deux axes pivots supplémentaires $119_3$ et $119_4$, qui s'étendent l'un vers l'autre, à savoir à l'intérieur de la chambre.

Ces différents axes pivots sont placés sur un même axe géométrique, noté A'. Les axes pivots extérieurs $119_1$ et $119_2$ sont montés dans le support 108, ce qui permet à la chambre de pouvoir pivoter par rapport à ce support, autour de cet axe A'. De plus, le volume intérieur de la chambre 118 reçoit un autre moyeu 115, qui est monté sur les axes pivots intérieurs $119_3$ et $119_4$, de sorte que ce moyeu peut pivoter par rapport à la chambre 118, autour de ce même axe A'.

Ce moyeu 115 supporte un curseur 134, en étant solidaire d'un contrepoids 135. Du fait de la présence de ce contrepoids, le moyeu et le curseur sont immobiles en service, à savoir qu'ils ne sont pas entraînés en rotation avec la chambre.

Par ailleurs, la paroi intérieure de la chambre 118 reçoit une plaquette résistive 120, analogue à celle 20 décrite en référence au premier mode de réalisation. Cette plaquette 120 est reliée à deux câbles 136 et 138, par l'intermédiaire de barrettes conductrices 140 et 142. Enfin, la chambre 118 est pourvue d'une roue dentée 112 dont le centre coïncide avec l'axe A'. Cette roue dentée 112, propre à être entraînée par le secteur denté 110, présente un nombre de dents bien inférieur à ce dernier, en référence à un tour complet.

En service, comme dans le premier mode de réalisation, le déplacement vertical du flotteur induit une mise en rotation du secteur denté 110, qui entraîne à son tour la roue 112. Par conséquent, l'ensemble de la chambre 118 est alors entraîné en rotation, par rapport au support 108, autour de l'axe A'.

Pendant cette mise en rotation, du fait de la présence du contrepoids, le moyeu 115 et le curseur 134 restent immobiles, de sorte qu'il existe un pivotement relatif entre la chambre 118 et ce moyeu 115. En d'autres termes, le curseur 134 se déplace par rapport à la plaquette résistive 120, ce qui permet d'obtenir des informations quant au niveau de carburant, comme dans le premier mode de réalisation.

La gravité constitue donc le lien immatériel, assimilable à l'entraînement magnétique du premier mode de réalisation, entre l'extérieur et l'intérieur de la chambre 118. Ainsi, dans ce second mode de réalisation, on ne retrouve pas non plus la présence d'un organe d'entraînement direct, s'étendant au travers des parois de la chambre 118.

Etant donné que le secteur denté 110 présente, en équivalent sur un tour complet, un nombre de dents bien supérieur à celui de la roue 112, il existe une surmultiplication du mouvement, imparti au curseur sous l'effet du déplacement du flotteur.

A titre de variante non représentée, on peut prévoir de rendre solidaire du moyeu, non pas le curseur 134, mais la plaquette résistive 120, le curseur étant alors solidaire de la chambre. En d'autres termes, ce mode de réalisation alternatif consiste à intervertir ce curseur et cette plaquette, ce qui permet également d'obtenir un mouvement relatif entre ces deux organes mécaniques.

L'utilisation d'un dispositif de surmultiplication, conforme à l'invention, permet d'obtenir une plus grande précision de mesure que dans l'art antérieur faisant appel à un entraînement immatériel, de type magnétique ou à un contrepoids. A cet égard, il est du mérite de la Demanderesse d'avoir identifié que le manque de précision de mesure, inhérent à cet art antérieur, était principalement dû à un phénomène d'hystérésis nuisible à la précision requise de la jauge.

Ainsi, dans le cas de l'entraînement magnétique classique, lors d'un mouvement de l'aimant moteur, à savoir celui qui est lié à l'ensemble bras et flotteur, l'aimant récepteur, lié au curseur, commence à se déplacer uniquement lorsque le couple magnétique est supérieur au couple résistant. Cette différence se traduit par un écart angulaire, entre la position du bras et la position du curseur, toujours dans le sens opposé au mouvement. Ce couple résistant provient des frottements résultant du guidage nécessaire des pièces mobiles, telles que le curseur, ainsi que de la pression du contact du curseur glissant sur la plaquette résistive, laquelle pression est nécessaire pour permettre le passage du courant. Par ailleurs, la rotation du rhéostat est saccadée du fait même de la nature d'un effort résistif provenant d'un frottement. En effet, cet effort présente une valeur relativement importante au début du mouvement, puis diminue de façon subite.

Dans le cas d'un entraînement classique de l'art antérieur de type immatériel sous l'effet de la gravité, on retrouve également la présence d'une hystérésis susceptible d'affecter la qualité de mesure. En effet, il existe de nombreux frottements dus au contact du moyeu de curseur sur son axe de guidage en rotation, aux contacts de guidage en translation, ainsi qu'aux efforts de contact du curseur sur la plaquette résistive. Du fait du couple résistant induit par ces différents frottements, le curseur et son contrepoids sont entraînés par la rotation de la chambre, jusqu'à ce que le couple de rappel exercé par la gravité, à savoir le poids du contrepoids, dépasse le couple résistant des frottements, de façon à ramener le curseur à la verticale. Il existe par conséquent un retard entre le mouvement moteur du bras et le mouvement relatif du curseur par rapport à la plaquette résistive.

Or, conformément à l'invention, la valeur de cette hystérésis est réduite, d'un facteur correspondant à celui de la surmultiplication permise par l'invention.

De façon avantageuse, cette réduction présente un coefficient compris entre 3.5 et 7, de préférence entre 5 et 6. Une telle plage de valeurs assure un bon compromis. En effet, elle autorise tout d'abord une réduction substantielle de l'amplitude apparente de l'hystérésis. Par ailleurs, elle permet de ne pas modifier sensiblement l'angle de rotation habituel du flotteur, compris typiquement entre 45° et 90°, tout en conférant un débattement angulaire du curseur inférieur à un tour complet.

On notera également que le dispositif de surmultiplication prévue par l'invention permet aux pistes conductrices 28 et équivalentes des autres modes de réalisation de s'étendre selon un secteur angulaire, bien plus élevé que dans l'état de la technique. Ainsi, comme on l'a vu ci-dessus, ce secteur est avantageusement compris entre 270 et 330°, ce qui est à comparer avec l'état de la technique, dans lequel les pistes conductrices s'étendent typiquement selon un angle de 45° à 90°, le plus souvent voisin de 60°.

Cette caractéristique est avantageuse, puisqu'elle permet d'augmenter la résolution, à savoir qu'il existe davantage de points de mesure entre les états respectivement « vide » et « plein » du réservoir. De plus, le fait de réaliser les pistes 28 selon un secteur angulaire d'angle au sommet élevé permet de les élargir, ce qui facilite la réalisation industrielle de la plaquette résistive et permet que les contacts $34_1$ et $34_2$ travaillent sur un plus faible rayon. Dans ces conditions, leur couple résistif est atténué, ce qui génère moins d'hystérésis.

L'invention n'est pas limitée aux exemples décrits et représentés. Ainsi, dans les deux modes de réalisation illustrés, le dispositif de surmultiplication est formé par un engrenage. A titre de variante, on peut prévoir d'utiliser des moyens alternatifs, comme par exemple une courroie crantée, une chaine, une biellette, ou encore un entraînement par friction. De préférence, on fait appel à un entraînement évitant les risques de glissement, ce qui autorise une meilleure précision de la mesure.

## Revendications

**1.** Ensemble de mesure du niveau de liquide dans une enceinte, comprenant :

- un flotteur (2 ; 102) propre à reposer à la surface du liquide, afin de suivre les variations du niveau de ce liquide ;
- un bras (4 ; 104) solidaire du flotteur, propre à être entraîné en rotation par ce flotteur ;
- un rhéostat (20, 34 ; 120,134) logé dans une chambre étanche (18 ; 118), ce rhéostat comprenant deux organes électriques susceptibles de se déplacer l'un par rapport à l'autre, notamment une plaquette résistive (20 ; 120) et un curseur (34 ; 134), afin de générer une résistance électrique variable, les variations de cette résistance étant représentatives des variations du niveau de liquide dans l'enceinte, et
- des moyens d'entraînement (10, 12, 14, $A_1$ - $A_4$ ; 110, 112) propres à entraîner un premier (34 ; 120) des deux organes électriques du rhéostat par rapport à un second (20 ; 134) de ces deux organes, sous l'effet du déplacement du bras, ces moyens d'entraînement ne s'étendant pas au travers d'une paroi de la chambre étanche,

**caractérisé en ce que** les moyens d'entraînement comprennent des moyens de surmultiplication (10,12 ; 110, 112), propres à entraîner le premier organe électrique (34 ; 120) selon un déplacement angulaire bien supérieur au déplacement angulaire du bras (4 ; 104).

2. Ensemble de mesure selon la revendication 1, **caractérisé en ce que** les moyens de surmultiplication (10,12 ; 110, 112) sont propres à assurer un rapport de surmultiplication compris entre 3.5 et 7, notamment entre 5 et 6.

3. Ensemble de mesure selon la revendication 1 ou 2, **caractérisé en ce que** les moyens de surmultiplication sont formés par un engrenage (10,12 ; 110, 112).

4. Ensemble de mesure selon la revendication précédente, **caractérisé en ce que** l'engrenage comprend deux organes dentés susceptibles de coopérer mutuellement, un premier (10 ; 110) de ces organes dentés étant entraîné par le bras (4 ; 104), alors que le second (12 ; 112) de ces organes dentés est propre à entraîner lepremier organe électrique (34 ; 120), le nombre de dents du premier organe denté étant bien supérieur au nombre de dents du second organe denté, en référence à un secteur angulaire de 360°.

5. Ensemble de mesure selon l'une des revendications précédentes, **caractérisé en ce que** les moyens d'entraînement (10, 12, $A_1$ - $A_4$) comprennent des moyens ($A_1$-$A_4$) de couplage magnétique entre deux pièces (12, 14) situées de part et d'autre d'une cloison (8) de la chambre étanche (18).

6. Ensemble de mesure selon la revendication 4, **caractérisé en ce que** le second organe denté (12), dit moteur, est placé à l'extérieur de la chambre (18) et est propre à entraîner un organe de couplage passif (14), placé à l'intérieur de la chambre, cet organe de couplage passif supportant ledit premier organe électrique (34).

7. Ensemble de mesure selon la revendication 6, **caractérisé en ce que** chacun parmi l'organe denté moteur (12) et l'organe de couplage passif (14) est pourvu d'au moins deux aimants ($A_1$, $A_2$, $A_3$, $A_4$), un premier aimant ($A_1$) appartenant à l'organe moteur (12) ou à l'organe passif étant propre à coopérer, par une première polarité ($S_1$), avec l'aimant en regard ($A_3$) porté par l'organe passif (14) ou l'organe moteur, alors qu'un second aimant ($A_2$) porté par l'organe moteur (12) ou l'organe passif est propre à coopérer, par sa seconde polarité ($N_2$), avec l'aimant en regard ($A_4$) porté par l'organe passif (14) ou l'organe moteur.

8. Ensemble de mesure selon l'une des revendications 1 à 4, **caractérisé en ce que** la chambre étanche (118) est propre à être mise en mouvement par les moyens d'entraînement et supporte ledit premier organe électrique (120), le second organe électrique (134) étant associé à un contrepoids (135), propre à l'immobiliser lors des déplacements de la chambre.

9. Ensemble de mesure selon les revendications 4 et 8, **caractérisé en ce que** le second organe denté (112) est monté sur une paroi de la chambre étanche (118).

10. Ensemble de mesure selon l'une quelconque des revendications précédente, **caractérisé en ce que** le rhéostat comprend une plaquette résistive (20) pourvu d'une série de pistes conductrices (28) s'étendant en arc de cercle, selon un secteur angulaire compris entre 270 et 330°.

11. Ensemble de mesure du niveau de liquide selon l'une des révisions précédentes, **caractérisé en ce qu'**il s'agit d'une jauge de mesure du niveau de carburant dans un réservoir.

12. Véhicule automobile équipé d'une jauge de mesure du niveau de carburant selon la revendication précédente.

*Fig.1*

2

Fig.2

4

6

10

12

8

2

A'

13

A

4

8

Fig.3

Fig.4

Fig.5

*Fig.6*

*Fig.7*

EP 2 216 633 A1

*Fig.9*

*Fig.8*

13

Europäisches
Patentamt

European
Patent Office

Office européen
des brevets

**RAPPORT DE RECHERCHE EUROPEENNE**

Numéro de la demande

EP 10 15 2468

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y | GB 970 256 A (MONITOR PATENT SAFETY DEVICES) 16 septembre 1964 (1964-09-16)<br>* page 1, ligne 62 - page 2, ligne 122; figures *<br>----- | 1-4,11, 12<br>8 | INV.<br>G01F23/36 |
| X<br>Y | US 5 357 815 A (WILLIAMSON CECIL M [US]) 25 octobre 1994 (1994-10-25)<br>* colonne 2, ligne 60 - colonne 6, ligne 2 *<br>----- | 1-7,9-12<br>8 | |
| Y | FR 2 561 379 A1 (VEGLIA E D [FR]) 20 septembre 1985 (1985-09-20)<br>* page 1, ligne 29 - page 2, ligne 3 *<br>* page 2, ligne 19 - page 3, dernière ligne; figures *<br>----- | 8 | |
| X<br>Y | US 1 649 885 A (ADAMS HARRY E ET AL) 22 novembre 1927 (1927-11-22)<br>* page 1, ligne 58 - page 5, ligne 109; figures *<br>----- | 1-4,9, 11,12<br>8 | |
| | | | DOMAINES TECHNIQUES RECHERCHES (IPC)<br><br>G01F |

Le présent rapport a été établi pour toutes les revendications

| Lieu de la recherche | Date d'achèvement de la recherche | Examinateur |
|---|---|---|
| Munich | 10 juin 2010 | Politsch, Erich |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**EP 2 216 633 A1**

**ANNEXE AU RAPPORT DE RECHERCHE EUROPEENNE
RELATIF A LA DEMANDE DE BREVET EUROPEEN NO.**

EP 10 15 2468

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-06-2010

| Document brevet cité au rapport de recherche | Date de publication | Membre(s) de la famille de brevet(s) | Date de publication |
|---|---|---|---|
| GB 970256 A | 16-09-1964 | AUCUN | |
| US 5357815 A | 25-10-1994 | AUCUN | |
| FR 2561379 A1 | 20-09-1985 | AUCUN | |
| US 1649885 A | 22-11-1927 | AUCUN | |

EPO FORM P0460

Pour tout renseignement concernant cette annexe : voir Journal Officiel de l'Office européen des brevets, No.12/82

15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 970256 A

- US 5357815 A